# EUROPEAN PATENT SPECIFICATION

(11) **EP 3 965 987 B1**
(45) Date of publication and mention of the grant of the patent: **24.07.2024**
(21) Application number: 20787013.0
(22) Date of filing: 30.03.2020
(51) Int. Cl.: B23B 45/14, B23B 47/00, B23D 45/02, B23D 47/02, B28D 7/00

(54) **DRILL COLUMN END SECTION ASSEMBLY FOR A DRILL STAND**
ENDSTÜCKANORDNUNG EINER BOHRSÄULE FÜR EINEN BOHRSTÄNDER
ENSEMBLE SECTION D'EXTRÉMITÉ DE PERFORATRICE SUR COLONNE DESTINÉ À UN SUPPORT DE PERFORATRICE

(30) Priority: 10.04.2019 SE 1950448
(43) Date of publication of application: 16.03.2022
(60) Divisional application: 24163653.9
(73) Proprietor: Husqvarna AB, 561 82 Huskvarna (SE)
(72) Inventor: SKÖTTE, Karl, 411 18 Göteborg (SE); VIDLUND, Robert, 443 38 Lerum (SE)
(86) International application number: PCT/SE2020/050329
(87) International publication number: WO 2020/209774

(56) References cited:
- WO-A1-2014/070054
- WO-A1-2014/205264
- DE-U1- 29 703 685
- GB-A- 2 142 472
- US-A- 2 888 965
- US-A- 3 890 058
- US-A- 5 150 993
- US-A- 5 233 891
- US-A- 5 797 708
- US-A1- 2008 196 560

## Description

### TECHNICAL FIELD

There are disclosed herein drill stands for high power drilling equipment such as core drills. The disclosure relates in particular to improved drill column end section assemblies comprising releasably held stopping elements.

More particularly the invention relates to a drill column end section according to the preamble of claim 1, a method for attaching a feed unit to a drill stand and a method for removing a feed unit from a drill stand. A drill column end section according to the preamble of claim 1 is known from US 5 797 708 A.

### BACKGROUND

When drilling large holes, e.g., holes with diameters above 100 mm, it is preferred to use a drill stand as opposed to drilling by hand. A drill stand is a mechanical drill guide arrangement comprising a rigid column along which a drill stand feed unit may traverse in forward and reverse directions. A drill motor can be attached to the feed unit and thus used to cut into a material with high precision. The drill stand feed unit can be either manually or automatically operated to traverse up and down the column.

Drill stands are designed to be sturdy and stable, easy to transport, and easy to anchor and set up. In particular, it is desired to be able to easily attach the drill feed unit to the column before commencing the cutting operation and later remove the drill feed unit from the column after the hole is completed.

US2997900 relates to a tool fixture.

CN205465273 relates to a drill jig.

There is a need for drill stands where the column and drill feed units can be easily assembled, used, and later disassembled in a safe and efficient manner.

### SUMMARY

It is an object of the present disclosure to provide a safe and easy to use drill stand comprising an improved drill column end section assembly. This object is obtained by a drill column end section assembly, according to claim 1, comprising an end section and a feed unit stopping element arranged movable between a first position and a second position relative to the end section. The stopping element, when in the first position, is configured to prevent a drill stand feed unit from traversing or moving past the drill column end section. The stopping element, when in the second position, is configured to allow the drill stand feed unit to traverse or move past the drill column end section. The drill column end section assembly also comprises a positioning element configured to releasably hold the stopping element in the first position.

The positioning element holds the stopping element in place during cutting operation and prevents accidental and/or unintentional traversing of the feed unit past the end section and off the column, which is an advantage. It is a further advantage that the stopping element is not permanently locked in place by, e.g., some locking device. Instead it is only releasably held in place, allowing convenient moving of the stopping element to the second position where the drill stand feed unit may be conveniently removed from the drill stand.

According to aspects, the stopping element, when in the first position, protrudes laterally from a side of the drill column end section to prevent the drill stand feed unit from traversing past the drill column end section. The stopping element, when in the second position, is arranged flush with the side of the drill column end section.

This way an efficient and robust stopping function is provided. Also, since the stopping member protrudes from the side of the drill column end section, it can be seen by an operator who then knows by visual inspection if the feed unit is locked onto the column or not. The stopping element may optionally comprise a label informing the operator about the status of the stopping member.

According to aspects, the stopping element is arranged to move between the first position and the second position in a passage arranged in the drill column end section assembly. The passage constrains movement of the stopping element in directions other than between the first and second positions.

The passage constrains movement of the stopping element to movement along a single axis, and therefore contributes to preventing the stopping element from jamming and/or getting stuck between the first and the second positions. Also, the passage may act as conduit for lubrication of the stopping element as it moves between the first and the second position. The passage provides for mechanical robustness, which is an advantage.

According to aspects, the positioning element comprises a resilient element configured to releasably hold the stopping element in the first position.

The resilient element can be configured to provide a holding force which is strong enough such that the stopping element does not unintentionally leave the first position during drilling operation, yet weak enough to be overcome by hand. Thus, the stopping element can be conveniently moved between the first and second positions as needed without requiring excessive force or dedicated tools for the purpose.

According to some aspects, the resilient element comprises a spring loaded rounded member configured to enter a corresponding recess when the stopping element is in the first position. This rounded member may, e.g., be a ball or other element comprising a spherical cap configured to enter the recess and thereby releasably hold the stopping element in the first position. Optionally, a threaded element such as a bolt or screw may be used to hold the spring loaded rounded member in place.

According to other aspects, the resilient element comprises a spring arranged to bias the stopping element towards the first position. According to some such aspects, the stopping element comprises at least one stop lug configured to prevent the stopping element from protruding beyond a respective protrusion distance from the drill column end section assembly.

Optionally, the resilient element may comprise a leaf spring which biases the stopping element towards the first position if the stopping element is located on one side of a midpoint position and biases the stopping element towards the second position if the stopping element is located on the other side of the midpoint position. Thus, advantageously, a snap-in action is obtained.

The different disclosed options for the resilient element all provide mechanical robustness and also provides for convenience when moving the stopping element between the first and the second position.

There are also disclosed herein drill stands associated with the above mentioned advantages, as well as methods for attaching and removing feed units to and from drill stands according to claims 10 and 11.

A related object of the present disclosure is to provide a locking mechanism for a drill stand which simplifies configuration of the drill stand at a fixed angle.

This object is obtained by a locking mechanism for locking an angle adjustment arrangement of a drill stand at a fixed angle. The locking mechanism comprises a locking bolt and a frame configured to slidably hold first and second gripping members. Each gripping member comprises an angled surface configured to engage a corresponding angled surface of the frame, whereby the gripping members are arranged to grip around a respective protrusion or lath arranged longitudinally on the drill stand when pushed against the angled surface of the frame by the locking bolt.

This arrangement provides for a convenient locking mechanism which is easy to engage and to disengage.

According to aspects, the angled surface is angled at between 35-45 degrees measured with respect to the extension direction of the locking bolt, and preferably about 40 degrees. This range provides an easy engagement and release of the locking mechanism.

According to aspects, the locking bolt comprises a socket at one end of the bolt for receiving a tool configured with a shape complementary to the socket.

The socket simplifies engaging and disengaging the locking bolt.

According to aspects, the locking bolt bears against the gripping members by respective conically designed washers.

This conical design allows, e.g., for adjusting the drilling angle by releasing a single locking bolt.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise.

Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described more in detail with reference to the appended drawings, where:
Figures 1-3 schematically illustrate drill column end section assemblies;
Figures 4-5 show details of an example drill column end section assembly;
Figure 6 illustrates an example drill stand;
Figures 7-8 are flow charts illustrating methods;
Figures 9-10 illustrate an example locking mechanism; and
Figures 11-13 illustrate details of an example drill stand.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

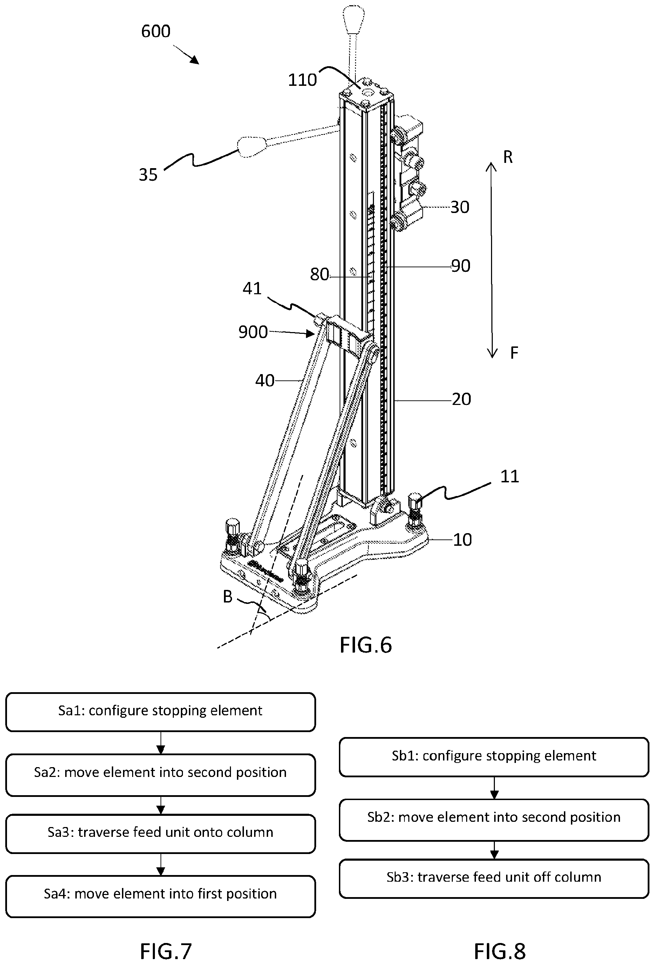

Figure 6 shows an example drill stand 600. The drill stand comprises a base plate 10 which can be anchored to, e.g., a concrete floor or to a concrete wall by bolts 11.

According to some aspects, the bolts 11 comprise counter-bolts which lock the bolts 11 in place during cutting operation. The counter-bolts thereby prevent the bolts 11 from disengaging due to, e.g., vibrations from the cutting operation.

The drill stand 600 also comprises a column 20 along which a feed unit 30 may traverse in a forward direction F and in a reverse direction R, e.g., along a track on the column 20. A drill motor or drill tool, such as a core cut machine, can be attached to the feed unit 30. The drill tool cuts into an object as the feed unit is moved in the forward direction F. The angle of the drilling tool with respect to the object can be configured by an angle adjustment arrangement 40.

Scale markings 80, 90 on the column indicate drilling angle and drilling depth, respectively.

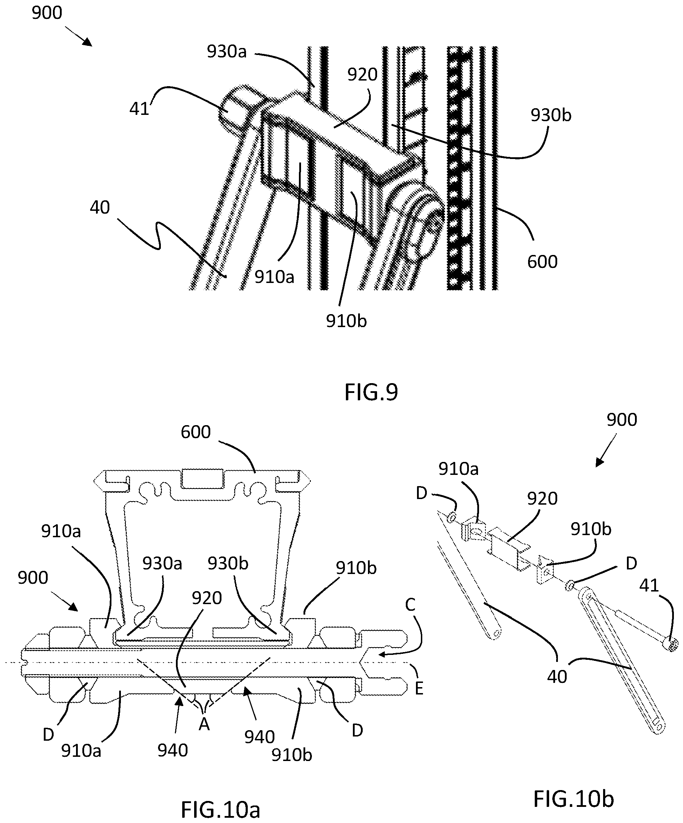

The angle adjustment arrangement 40 is locked in place by a locking mechanism 900 comprising a locking bolt 41. This locking device will be discussed in more detail below in connection to Figure 9.

The hinges on the drill stand 600 comprise conically designed washers. This conical design allows, e.g., for adjusting the drilling angle by releasing the single locking bolt 41.

The drill stand feed unit 30 in Figure 6 is a manual feed unit which comprises handles 35 for manually traversing the feed unit 30 along the column 20.

Some drill stand feed units (not shown in Figure 6) are automatic feed units which are motorized to automatically traverse the column in the forward an in the reverse direction. Automatic feed units traverse along the column in response to control commands from an electronic control module or in response to control signals from a user input interface.

It is important that the feed unit 30 is not allowed to traverse too far in the reverse direction R, since then the drill feed unit will fall off the column, potentially causing damage to the drilling tool and/or injury to an operator. The drill stand 600 therefore comprises a drill column end section assembly with an end section 110 and a stopping element (not shown in Figure 6). The stopping element is arranged to prevent the drill feed unit 30 from traversing past the end section 110, thereby providing for a safe operation. Notably, the stopping element is releasably held in place by a positioning element. This means that the stopping element remains in position during the drilling operation, but can be easily removed, e.g., by hand force, if the drill feed unit is to be removed from the column for some reason.

A suitable holding force magnitude to be exerted by the positioning element can be determined by experimentation in a known manner.

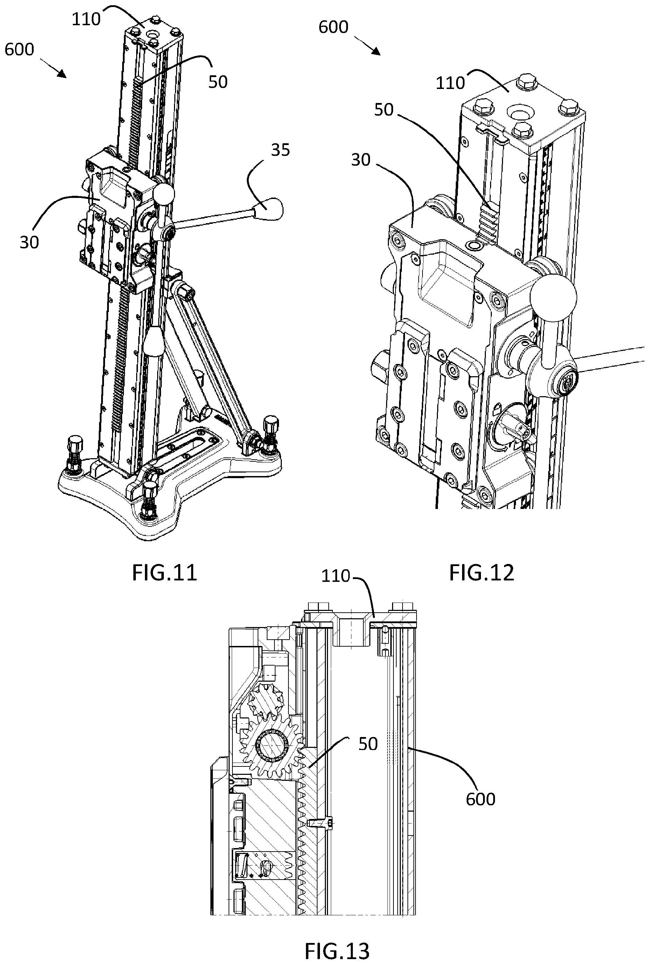

Optionally, the drill stand 600 comprises a gear rack which does not extend all the way to the end section 110. This way the feed unit 30 is prevented from exerting a force on the stopping element. Note that the feed unit may still fall off the column, e.g., if the column is mounted up-side down for drilling a hole in a roof. This gear rack is schematically illustrated in Figure 11.

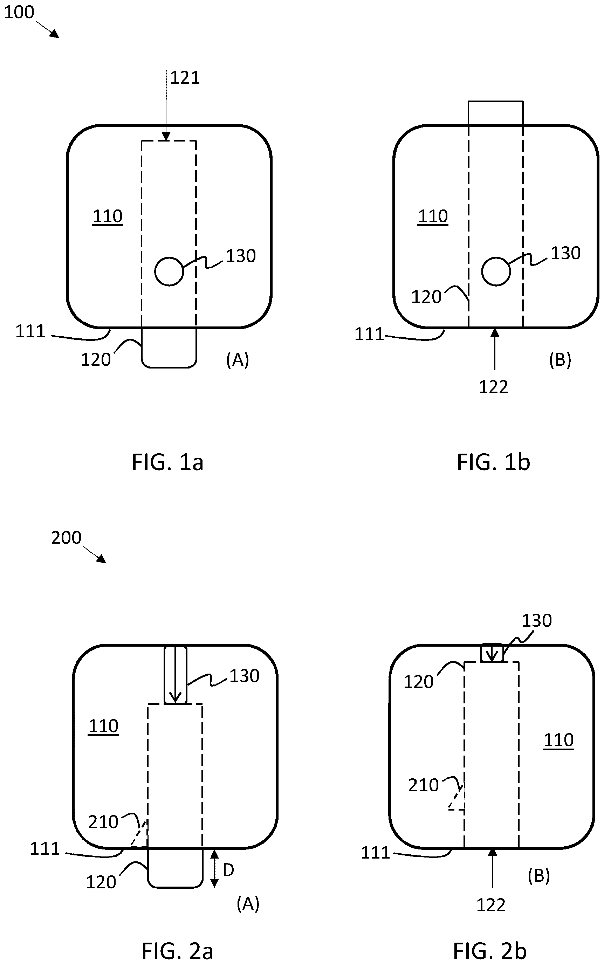

Figures 1a and 1b schematically illustrate an example of a drill column end section assembly 100. The drill column end section assembly comprises an end section 110 and a feed unit stopping element 120 arranged movable between a first position A and a second position B. The stopping element 120, when in the first position A, is arranged to prevent a drill stand feed unit 30 from traversing past the drill column end section 110, and, when in the second position B, is arranged to allow the drill stand feed unit 30 to traverse past the drill column end section 110. The stopping element protrudes out from a side 111 of the end section, which prevents the drill feed unit from traversing past the end section. In order to prevent the stopping element from unintentionally shifting between the positions during drilling, the drill column end section assembly comprises a positioning element 130 configured to releasably hold the stopping element 120 in the first position A. It is an advantage that the stopping element is releasably held in place as opposed to being locked in place by some locking mechanism. By being releasably held in place, the stopping element allows an operator to easily move the stopping element into the second position where the drill feed unit can be removed from the column. Consequently, both drill stand assembly, disassembly, and exchange of the drill stand feed unit is simplified without compromising safety.

In the example 100 shown in Figure 1a and 1b, the stopping element 120 is arranged to be manually moved by pushing 121 the stopping element from the second position B into the first position A. This locks the drill feed unit onto the column, i.e., prevents it from traversing past the end section 110. To remove the drill feed unit from the column, the stopping element 120 is manually pushed 122 in the other direction, i.e., into the second position B, where the drill feed unit may traverse past the end section 110 and thus be removed from the column.

Figures 2a and 2b illustrate another example of a drill column end section assembly 200. Here the positioning element 130 is instead a biasing arrangement which forces the stopping element 120 into the first position A. However, the stopping element is still just releasably held in the first position by the biasing element, which means that it is possible to manually push 122 the stopping element 120 into the second position B. The biasing element 130 may be, e.g., a spring.

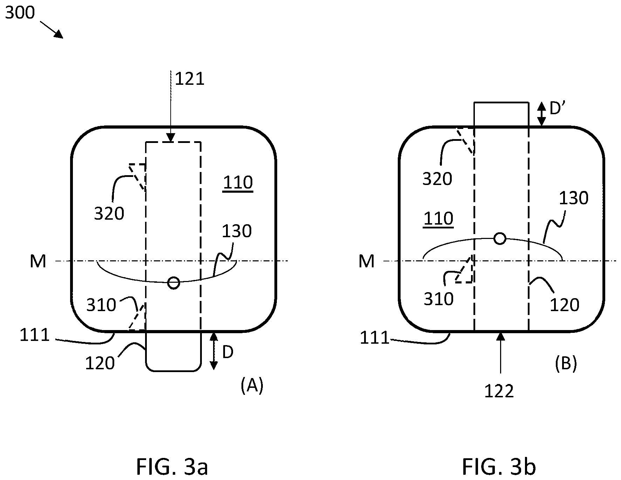

Figures 3a and 3b illustrate yet another example of a drill column end section assembly 300. Here the positioning element 130 is also a biasing arrangement which forces the stopping element 120 into the first position A. According to aspects, the biasing arrangement in Figure 3 is a leaf spring, but other spring types can be used with the same effect. To move the stopping element 120 from the first position A to the second position B, a force must be overcome. However, once the stopping element 120 passes a mid-point M of the biasing arrangement, the resilient element instead flexes in the other direction and pushes the stopping element 120 into the second position B, as illustrated in Figure 3b. Again, the stopping element is still just releasably held in the first position by the biasing element, which means that it is possible to manually push 122 the stopping element 120 into the second position B.

In all three examples 100, 200, 300, the stopping element 120, when in the first position A, protrudes laterally from a side 111 of the drill column end section 110 to prevent the drill stand feed unit 30 from traversing past the drill column end section 110, and, when in the second position B is arranged flush with the side 111 of the drill column end section 110 to allow the drill stand feed unit 30 to traverse past the drill column end section 110.

It is also appreciated that in all three examples 100, 200, 300, the positioning element 130 comprises a resilient element configured to releasably hold the stopping element 120 in the first position A.

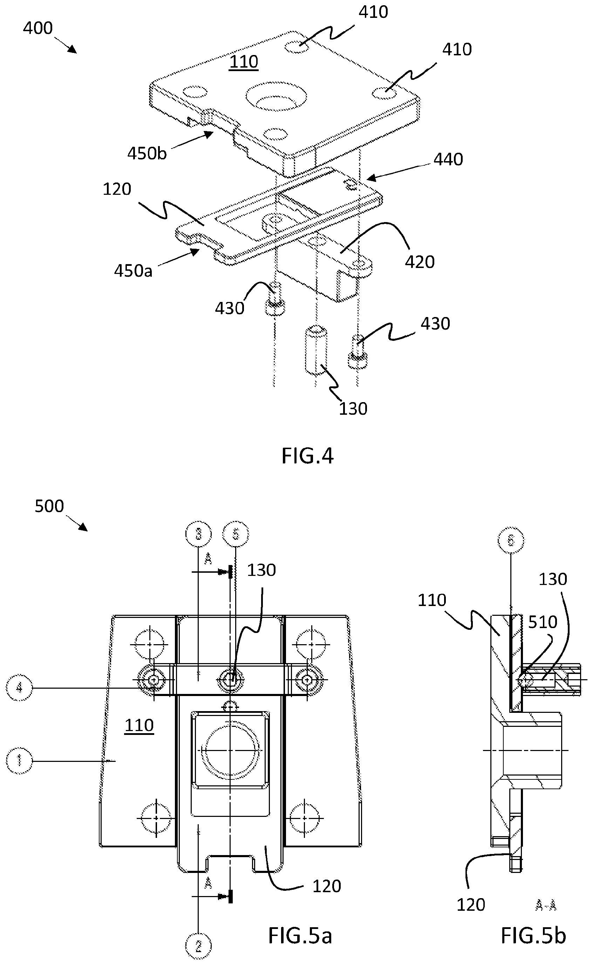

Figure 4 shows a more detailed example of a drill column end section assembly 400. This drill column end section assembly comprises bolt holes 410 for attaching the end section to a drill column of a drill stand, such as the drill stand 600. The end section also comprises a holding member 420 for holding the stopping element 120. The holding member is attached to the drill column end section assembly by holding bolts 430.

The stopping member 120 illustrated in Figure 4 comprises a label 440 indicating when the stopping element is in the second position B, i.e., when the drill feed unit 30 is not prevented from traversing past the drill column end section assembly 110. This allows an operator to more easily determine the status, i.e., current position, of the stopping element 120 by visual inspection, which is an advantage.

The stopping element 120 and the end section 110 here also comprise optional cutout sections to accommodate, e.g., a cog-wheel of the drill feed unit 30.

Figures 4a and 4b show different views of an example drill column end section assembly 500. The stopping element 120 is here arranged to move between the first position A and the second position B in a passage arranged in the drill column end section 110. The passage constrains movement of the stopping element in directions other than between the first and second positions.

In the example drill column end section assemblies 400, 500, the resilient element 130 comprises a spring loaded rounded member configured to enter a corresponding recess 510 when the stopping element 120 is in the first position A.

In the examples 400, 500, the rounded member is a ball configured to enter the recess when the stopping element 120 is in the first position A. However, any element comprising a spherical or rounded cap section configured to enter said recess can be used.

According to aspects, the drill column end section assembly comprises a threaded element configured to hold the spring loaded rounded member.

With reference again to Figures 2a and 2b, according to some aspects, the resilient element comprises a spring arranged to bias the stopping element 120 in direction of the first position A.

According to some aspects, the stopping element comprises a stop lug 210, 310, 320 configured to prevent the stopping element 120 from protruding beyond a protrusion distance D, D' from the drill column end section assembly.

Figure 7 is a flow chart illustrating a method for attaching a feed unit 30 to a drill stand. The method comprises configuring Sa1 a feed unit stopping element 120 to be movable between a first position A and a second position B in relation to an end section 110 of a drill column end section assembly 100, 200, 400, 500. The stopping element 120, when in the first position A, is arranged to prevent a drill stand feed unit 30 from traversing past the drill column end section 110. The stopping element 120, when in the second position B, is arranged to allow the drill stand feed unit 30 to traverse past the drill column end section 110. The drill column end section 110 comprises a positioning element 130 configured to releasably hold the stopping element 120 in the first position A. The method also comprises moving Sa2 the feed unit stopping element 120 into the second position B, traversing Sa3 the feed unit 30 past the end section 110 and onto the drill column, and moving Sa4 the feed unit stopping element 120 into the first position B, thereby preventing the feed unit from traversing past the drill column end section 110.

Figure 8 is a flow chart illustrating a method for removing a feed unit 30 from a drill stand, the method comprises configuring Sb1 a feed unit stopping element 120 to be movable between a first position A and a second position B in relation to an end section 110 of a drill column end section assembly 100, 200, 400, 500. The stopping element 120, when in the first position A, is arranged to prevent a drill stand feed unit 30 from traversing past the drill column end section 110. The stopping element 120, when in the second position B, is arranged to allow the drill stand feed unit 30 to traverse past the drill column end section 110. The drill column end section 110 comprises a positioning element 130 configured to releasably hold the stopping element 120 in the first position A. The method also comprises moving Sb2 the feed unit stopping element 120 into the second position B, and traversing Sb3 the feed unit 30 past the end section 110 and off the drill column, thereby removing the feed unit from the drill column.

Figure 9 illustrates a locking mechanism 900 for an angle adjustment arrangement, such as the angle adjustment 40 shown in Figure 6. The locking mechanism, when released, allows adjustment of the drilling angle of the drill stand. The drilling angle is then fixed by engaging the locking mechanism by tightening the bolt 41. The locking mechanism 900 comprises a frame 920 configured to hold first and second gripping members 91 0a, 91 0b. The gripping members are arranged to grip around a respective protrusion or lath 930a, 930b arranged longitudinally on the drill stand 600. This provides for a convenient locking mechanism which is easy to engage and to disengage.

Figure 10a shows a cross-section drawing of the locking mechanism 900 seen from the top of the drill stand 600. The ledges or protrusions 930a, 930b are visible in the figure, and the first and second gripping members 910a, 910b are here shown in an engaged position. Notably, the first and second gripping members 910a, 910b comprise surfaces arranged at an angle 940 with respect to the frame 920. This angle allows for the gripping action.

Figure 10b is an exploded view of the locking mechanism 900.

Figures 9, 10a, and 10b illustrate a locking mechanism 900 for locking an angle adjustment arrangement 40 of a drill stand 600. The locking mechanism comprises a frame 920 configured to slidably hold first and second gripping members 910a, 910b.

Each gripping member comprises an angled surface 940 configured to engage a corresponding angled surface of the frame 920, whereby the gripping members are arranged to grip around a respective protrusion or lath 930a, 930b arranged longitudinally on the drill stand 600 when pushed against the angled surface of the frame 920 by a locking bolt 41.

In other words, when the bolt 41 is tightened, the gripping members are pushed against each other. This means that the angled surfaces 940 slide against the corresponding angled surfaces on the frame, whereby the gripping members 910a, 910b grip onto the longitudinal lath on the drill stand 600.

The angle of the angled surface 940 is between 35-45 degrees measured with respect to the extension direction of the locking bolt 41, and preferably about 40 degrees.

Figure 11 shows a front view of the drill stand 600. Here the gear rack 50 which does not extend all the way to the end section 110 is seen. As mentioned above, this prevents the feed unit 30 from exerting a force on the stopping element 120, since the feed unit cannot be lifted above the point where the gear rack 50 ends.

## Claims

1. A drill column end section assembly (100, 200, 300, 400, 500) for a drill stand (600), wherein the drill column end section assembly (100, 200, 300, 400, 500) is arranged to be attached to a column end of a drill stand (600) and comprises an end section (110), **characterized in that** the drill column end section assembly (100, 200, 300, 400, 500) comprises a feed unit stopping element (120) arranged movable between a first position (A) and a second position (B) relative to the end section (110), wherein the stopping element (120), when in the first position (A), is arranged to prevent a drill stand feed unit (30) from traversing past the drill column end section (110), and, when in the second position (B), is arranged to allow the drill stand feed unit (30) to traverse past the drill column end section (110), the drill column end section assembly further comprising a positioning element (130) configured to releasably hold the stopping element (120) in the first position (A).

2. The drill column end section assembly (100, 200, 300, 400, 500) according to claim 1, wherein the stopping element (120), when in the first position (A), protrudes laterally from a side of the drill column end section (110) to prevent the drill stand feed unit (30) from traversing past the drill column end section (110).

3. The drill column end section assembly (100, 200, 300, 400, 500) according to claim 1 or 2, wherein the stopping element (120), when in the second position (B), is arranged flush with the side of the drill column end section (110).

4. The drill column end section assembly (400, 500) according to any previous claim, wherein the stopping element (120) is arranged to move between the first position (A) and the second position (B) in a passage arranged in the drill column end section (110), wherein the passage is configured to constrain movement of the stopping element in directions other than a direction between the first and second positions (A, B).

5. The drill column end section assembly (100, 200, 300, 400, 500) according to any previous claim, wherein the positioning element (130) comprises a resilient element configured to releasably hold the stopping element (120) in the first position (A).

6. The drill column end section assembly (100, 400, 500) according to claim 5, wherein the resilient element is a spring loaded rounded member configured to enter a corresponding recess when the stopping element (120) is in the first position (A), and preferably the rounded member is a ball or comprises a spherical cap section.

7. The drill column end section assembly (200, 300) according to claim 5, wherein the resilient element comprises a spring arranged to bias the stopping element (120) towards the first position (A).

8. A drill stand (600) comprising a drill column (20) terminated by the drill column end section assembly (100, 200, 400, 500) according to any of claims 1-7.

9. Use of a drill column end section assembly (100, 200, 300, 400, 500) according to any of claims 1-7 for preventing a drill stand feed unit (30) from traversing past an end section (110) of the drill column end section assembly.

10. A method for attaching a feed unit (30) to a drill stand (600), **characterized in that** the method comprises;
configuring (Sa1) a feed unit stopping element (120) to be movable between a first position (A) and a second position (B) in relation to an end section (110) of a drill column end section assembly (100, 200, 400, 500) attached to a column end of a drill stand (600), wherein the stopping element (120), when in the first position (A), is arranged to prevent a drill stand feed unit (30) from traversing past the drill column end section (110), and, when in the second position (B), is arranged to allow the drill stand feed unit (30) to traverse past the drill column end section (110), wherein the drill column end section (110) comprises a positioning element (130) configured to releasably hold the stopping element (120) in the first position (A),
moving (Sa2) the feed unit stopping element (120) into the second position (B), traversing (Sa3) the feed unit (30) past the end section (110) and onto the drill column, and
moving (Sa4) the feed unit stopping element (120) into the first position (B), thereby preventing the feed unit from traversing past the drill column end section (110).

11. A method for removing a feed unit (30) from a drill stand (600), **characterized in that** the method comprises;
configuring (Sb1) a feed unit stopping element (120) to be movable between a first position (A) and a second position (B) in relation to an end section (110) of a drill column end section assembly (100, 200, 400, 500) attached to a column end of a drill stand (600), wherein the stopping element (120), when in the first position (A), is arranged to prevent a drill stand feed unit (30) from traversing past the drill column end section (110), and, when in the second position (B), is arranged to allow the drill stand feed unit (30) to traverse past the drill column end section (110), wherein the drill column end section (110) comprises a positioning element (130) configured to releasably hold the stopping element (120) in the first position (A),
moving (Sb2) the feed unit stopping element (120) into the second position (B), and
traversing (Sb3) the feed unit (30) past the end section (110) and off the drill column, thereby removing the feed unit from the drill column.

## Patentansprüche

1. Bohrsäulenendabschnittsbaugruppe (100, 200, 300, 400, 500) für einen Bohrständer (600), wobei die Bohrsäulenendabschnittsbaugruppe (100, 200, 300, 400, 500) angeordnet ist, um an einem Säulenende eines Bohrständers (600) angebracht zu werden und einen Endabschnitt (110) umfasst,
**dadurch gekennzeichnet, dass** die Bohrsäulenendabschnittsbaugruppe (100, 200, 300, 400, 500) ein Vorschubeinheitsstoppelement (120) umfasst, das zwischen einer ersten Position (A) und einer zweiten Position (B) relativ zu dem Endabschnitt (110) beweglich angeordnet ist, wobei das Stoppelement (120), wenn es in der ersten Position (A) ist, angeordnet ist, um zu verhindern, dass eine Bohrständervorschubeinheit (30) an dem Bohrsäulenendabschnitt (110) vorbei verschoben wird, und, wenn es in der zweiten Position (B) ist, angeordnet ist, um zu ermöglichen, dass die Bohrständervorschubeinheit (30) an dem Bohrsäulenendabschnitt (110) vorbei verschoben wird, die Bohrsäulenendabschnittsbaugruppe ferner umfassend ein Positionierungselement (130), das konfiguriert ist, um das Stoppelement (120) in der ersten Position (A) lösbar zu halten.

2. Bohrsäulenendabschnittsbaugruppe (100, 200, 300, 400, 500) nach Anspruch 1, wobei das Stoppelement (120), wenn es in der ersten Position (A) ist, von einer Seite des Bohrsäulenendabschnitts (110) seitlich vorsteht, um zu verhindern, dass die Bohrständervorschubeinheit (30) an dem Bohrsäulenendabschnitt (110) vorbei verschoben wird.

3. Bohrsäulenendabschnittsbaugruppe (100, 200, 300, 400, 500) nach Anspruch 1 oder 2, wobei das Stoppelement (120), wenn es in der zweiten Position (B) ist, mit der Seite des Bohrsäulenendabschnitts (110) bündig angeordnet ist.

4. Bohrsäulenendabschnittsbaugruppe (400, 500) nach einem der vorstehenden Ansprüche, wobei das Stoppelement (120) angeordnet ist, um sich zwischen der ersten Position (A) und der zweiten Position (B) in einem Durchgang, der in dem Bohrsäulenendabschnitt (110) angeordnet ist, zu bewegen, wobei der Durchgang konfiguriert ist, um die Bewegung des Stoppelements in andere Richtungen als eine Richtung zwischen der ersten und zweiten Position (A, B) einschränkt.

5. Bohrsäulenendabschnittsbaugruppe (100, 200, 300, 400, 500) nach einem der vorstehenden Ansprüche, wobei das Positionierungselement (130) ein elastisches Element umfasst, das konfiguriert ist, um das Stoppelement (120) in der ersten Position (A) lösbar zu halten.

6. Bohrsäulenendabschnittsbaugruppe (100, 400, 500) nach Anspruch 5, wobei das elastische Element ein federbelastetes, abgerundetes Element ist, das konfiguriert ist, um in eine entsprechende Aussparung einzutreten, wenn das Stoppelement (120) in der ersten Position (A) ist, und vorzugsweise wobei das abgerundete Element eine Kugel ist oder einen Kugelkappenabschnitt aufweist.

7. Bohrsäulenendabschnittsbaugruppe (200, 300) nach Anspruch 5, wobei das elastische Element eine Feder umfasst, die angeordnet ist, um das Stoppelement (120) zu der ersten Position (A) hin vorzuspannen.

8. Bohrständer (600) umfassend eine Bohrsäule (20), die in der Bohrsäulenendabschnittsbaugruppe (100, 200, 400, 500) nach einem der Ansprüche 1 bis 7 endet.

9. Verwendung einer Bohrsäulenendabschnittsbaugruppe (100, 200, 300, 400, 500) nach einem der Ansprüche 1 bis 7, zum Verhindern, dass eine Bohrständervorschubeinheit (30) an einem Endabschnitt (110) der Bohrsäulenendabschnittsbaugruppe vorbei geschoben wird.

10. Verfahren zum Anbringen einer Vorschubeinheit (30) an einem Bohrständer (600), **dadurch gekennzeichnet, dass** das Verfahren umfasst;
Konfigurieren (Sa1) eines Vorschubeinheitsstoppelements (120), um zwischen einer ersten Position (A) und einer zweiten Position (B) in Bezug auf einen Endabschnitt (110) einer Bohrsäulenendabschnittsbaugruppe (100, 200, 400, 500), die an einem Säulenende eines Bohrständers (600) angebracht ist, beweglich zu sein, wobei das Stoppelement (120), wenn es in der ersten Position (A) ist, angeordnet ist, um zu verhindern, dass eine Bohrständervorschubeinheit (30) an dem Bohrsäulenendabschnitt (110) vorbei verschoben wird, und, wenn es in der zweiten Position (B) ist, angeordnet ist, um zu ermöglichen, dass die Bohrständervorschubeinheit (30) an dem Bohrsäulenendabschnitt (110) vorbei verschoben wird, wobei der Bohrsäulenendabschnitt (110) ein Positionierungselement (130) umfasst, das konfiguriert ist, um das Stoppelement (120) in der ersten Position (A) lösbar zu halten,
Bewegen (Sa2) des Vorschubeinheitsstoppelements (120) in die zweite Position (B),
Verschieben (Sa3) der Vorschubeinheit (30) an dem Endabschnitt (110) vorbei und auf die Bohrsäule, und
Bewegen (Sa4) des Vorschubeinheitsstoppelements (120) in die erste Position (B), wodurch verhindert wird, dass die Vorschubeinheit an dem Bohrsäulenendabschnitt (110) vorbei geschoben wird.

11. Verfahren zum Entfernen einer Vorschubeinheit (30) von einem Bohrständer (600), **dadurch gekennzeichnet, dass** das Verfahren umfasst;
Konfigurieren (Sb1) eines Vorschubeinheitsstoppelements (120), um zwischen einer ersten Position (A) und einer zweiten Position (B) in Bezug auf einen Endabschnitt (110) einer Bohrsäulenendabschnittsbaugruppe (100, 200, 400, 500), die an einem Säulenende eines Bohrständers (600) angebracht ist, beweglich zu sein, wobei das Stoppelement (120), wenn es in der ersten Position (A) ist, angeordnet ist, um zu verhindern, dass eine Bohrständervorschubeinheit (30) an dem Bohrsäulenendabschnitt (110) vorbei verschoben wird, und, wenn es in der zweiten Position (B) ist, angeordnet ist, um zu ermöglichen, dass die Bohrständervorschubeinheit (30) an dem Bohrsäulenendabschnitt (110) vorbei verschoben wird, wobei der Bohrsäulenendabschnitt (110) ein Positionierungselement (130) umfasst, das konfiguriert ist, um das Stoppelement (120) in der ersten Position (A) lösbar zu halten,
Bewegen (Sb2) des Vorschubeinheitsstoppelements (120) in die zweite Position (B) und
Verschieben (Sb3) der Vorschubeinheit (30) an dem Endabschnitt (110) vorbei und von der Bohrsäule herunter, wodurch die Vorschubeinheit von der Bohrsäule entfernt wird.

## Revendications

1. Ensemble de sections d'extrémité de colonne de forage (100, 200, 300, 400, 500) pour un support de forage (600), dans lequel l'ensemble de sections d'extrémité de colonne de forage (100, 200, 300, 400, 500) est agencé pour être attaché à une extrémité de colonne d'un support de forage (600) et comprend une section d'extrémité (110), **caractérisé en ce que** l'ensemble de sections d'extrémité de colonne de forage (100, 200, 300, 400, 500) comprend un élément d'arrêt d'unité d'alimentation (120) agencé de manière mobile entre une première position (A) et une seconde position (B) par rapport à la section d'extrémité (110), dans lequel l'élément d'arrêt (120), lorsqu'il se trouve dans la première position (A), est agencé pour empêcher une unité d'alimentation de support de forage (30) de dépasser la section d'extrémité de colonne de forage (110), et, lorsqu'il se trouve dans la seconde position (B), est agencé pour permettre à l'unité d'alimentation de colonne de forage (30) de dépasser la section d'extrémité de colonne de forage (110), l'ensemble de sections d'extrémité de colonne de forage comprenant en outre un élément de positionnement (130) conçu pour maintenir de manière libérable l'élément d'arrêt (120) dans la première position (A).

2. Ensemble de sections d'extrémité de colonne de forage (100, 200, 300, 400, 500) selon la revendication 1, dans lequel l'élément d'arrêt (120), lorsqu'il se trouve dans la première position (A), fait saillie latéralement d'un côté de la section d'extrémité de colonne de forage (110) pour empêcher l'unité d'alimentation de support de forage (30) de dépasser la section d'extrémité de colonne de forage (110).

3. Ensemble de sections d'extrémité de colonne de forage (100, 200, 300, 400, 500) selon la revendication 1 ou 2, dans lequel l'élément d'arrêt (120), lorsqu'il se trouve dans la seconde position (B), est agencé au ras du côté de la section d'extrémité de colonne de forage (110).

4. Ensemble de sections d'extrémité de colonne de forage (400, 500) selon l'une quelconque revendication précédente, dans lequel l'élément d'arrêt (120) est agencé pour se déplacer entre la première position (A) et la seconde position (B) dans un passage agencé dans la section d'extrémité de colonne de forage (110), dans lequel le passage est conçu pour contraindre un mouvement de l'élément d'arrêt dans des directions autres qu'une direction entre la première et la seconde position (A, B).

5. Ensemble de sections d'extrémité de colonne de forage (100, 200, 300, 400, 500) selon l'une quelconque revendication précédente, dans lequel l'élément de positionnement (130) comprend un élément élastique conçu pour maintenir de manière libérable l'élément d'arrêt (120) dans la première position (A).

6. Ensemble de sections d'extrémité de colonne de forage (100, 400, 500) selon la revendication 5, dans lequel l'élément élastique est un organe arrondi à ressort conçu pour entrer dans un évidement correspondant lorsque l'élément d'arrêt (120) se trouve dans la première position (A), et de préférence, l'organe arrondi est une bille ou comprend une section de capuchon sphérique.

7. Ensemble de sections d'extrémité de colonne de forage (200, 300) selon la revendication 5, dans lequel l'élément élastique comprend un ressort agencé pour solliciter l'élément d'arrêt (120) vers la première position (A).

8. Support de forage (600) comprenant une colonne de forage (20) terminée par l'ensemble de sections d'extrémité de colonne de forage (100, 200, 400, 500) selon l'une quelconque des revendications 1 à 7.

9. Utilisation d'un ensemble de sections d'extrémité de colonne de forage (100, 200, 300, 400, 500) selon l'une quelconque des revendications 1 à 7 pour empêcher une unité d'alimentation de support de forage (30) de dépasser une section d'extrémité (110) de l'ensemble de sections d'extrémité de colonne de forage.

10. Procédé pour attacher une unité d'alimentation (30) à un support de forage (600), **caractérisé en ce que** le procédé comprend ;
la configuration (Sa1) d'un élément d'arrêt d'unité d'alimentation (120) pour qu'il soit mobile entre une première position (A) et une seconde position (B) par rapport à une section d'extrémité (110) d'un ensemble de sections d'extrémité de colonne de forage (100, 200, 400, 500) attaché à une extrémité de colonne d'un support de forage (600), dans lequel l'élément d'arrêt (120), lorsqu'il se trouve dans la première position (A), est agencé pour empêcher une unité d'alimentation de support de forage (30) de dépasser la section d'extrémité de colonne de forage (110), et, lorsqu'il se trouve dans la seconde position (B), est agencé pour permettre à l'unité d'alimentation de support de forage (30) de dépasser la section d'extrémité de colonne de forage (110), dans lequel la section d'extrémité de colonne de forage (110) comprend un élément de positionnement (130) conçu pour maintenir de manière libérable l'élément d'arrêt (120) dans la première position (A),
le déplacement (Sa2) de l'élément d'arrêt d'unité d'alimentation (120) à la seconde position (B),
le fait de faire passer (Sa3) l'unité d'alimentation (30) au-delà de la section d'extrémité (110) et sur la colonne de forage, et
le déplacement (Sa4) de l'élément d'arrêt d'unité d'alimentation (120) à la première position (B), empêchant ainsi l'unité d'alimentation de dépasser la section d'extrémité de colonne de forage (110).

11. Procédé de retrait d'une unité d'alimentation (30) d'un support de forage (600), **caractérisé en ce que** le procédé comprend ;
la configuration (Sb1) d'un élément d'arrêt d'unité d'alimentation (120) pour qu'il soit mobile entre une première position (A) et une seconde position (B) par rapport à une section d'extrémité (110) d'un ensemble de sections d'extrémité de colonne de forage (100, 200, 400, 500) attaché à une extrémité de colonne d'un support de forage (600), dans lequel l'élément d'arrêt (120), lorsqu'il se trouve dans la première position (A), est agencé pour empêcher une unité d'alimentation de support de forage (30) de dépasser la section d'extrémité de colonne de forage (110), et, lorsqu'il se trouve dans la seconde position (B), est agencé pour permettre à l'unité d'alimentation de support de forage (30) de dépasser la section d'extrémité de colonne de forage (110), dans lequel la section d'extrémité de colonne de forage (110) comprend un élément de positionnement (130) conçu pour maintenir de manière libérable l'élément d'arrêt (120) dans la première position (A),
le déplacement (Sb2) de l'élément d'arrêt d'unité d'alimentation (120) à la seconde position (B), et
le fait de faire passer (Sb3) l'unité d'alimentation (30) au-delà de la section d'extrémité (110) et hors de la colonne de forage, retirant ainsi l'unité d'alimentation de la colonne de forage.
